(19) Europäisches Patentamt / European Patent Office / Office européen des brevets

(11) **EP 1 906 480 A1**

(12) **EUROPEAN PATENT APPLICATION**
published in accordance with Art. 153(4) EPC

(43) Date of publication:
**02.04.2008 Bulletin 2008/14**

(51) Int Cl.:
***H01M 8/04*** *(2006.01)*      ***H01M 8/10*** *(2006.01)*

(21) Application number: **06768199.9**

(22) Date of filing: **13.07.2006**

(86) International application number:
**PCT/JP2006/313991**

(87) International publication number:
**WO 2007/010834 (25.01.2007 Gazette 2007/04)**

(84) Designated Contracting States:
**DE**

(30) Priority: **21.07.2005 JP 2005211338**

(71) Applicant: **NEC Corporation**
**Minato-ku**
**Tokyo 108-8001 (JP)**

(72) Inventors:
• **OBATA, Takeshi,**
**NEC Corporation**
**Tokyo,**
**108-8001 (JP)**
• **SASAKI, Hideaki,**
**NEC Corporation**
**Tokyo,**
**108-8001 (JP)**

• **WATANABE, Yoshinori,**
**NEC Corporation**
**Tokyo,**
**108-8001 (JP)**
• **NAKAMURA, Shin,**
**NEC Corporation**
**Tokyo,**
**108-8001 (JP)**
• **MANAKO, Takashi,**
**NEC Corporation**
**Tokyo,**
**108-8001 (JP)**

(74) Representative: **Betten & Resch**
**Patentanwälte**
**Theatinerstrasse 8**
**80333 München (DE)**

(54) **FUEL CELL AND METHOD FOR OPERATING FUEL CELL**

(57) The present invention is a driving method of a fuel cell in which power is generated from a liquid fuel containing fuel and oxidant by a fuel cell main assembly 5. In order to suppress the degradation of the output characteristics after the stop and storage, a start-up operation S1 which is started after a stop state in which a load is not connected the fuel cell main assembly; a recovery operation S3 in which the liquid fuel is supplied to the fuel cell main assembly 5 such that an electrode of the fuel cell main assembly is reduced after the start-up operation S1; and a normal operation S4 in which the power is supplied to an external load 20.

Fig. 5

**Description**

**Technical field**

The present invention relates to a fuel cell and a method for driving a fuel cell, and more particularly relates to a fuel cell which generates electricity through chemical reaction of fuel with oxidation agent and a method for driving a fuel cell.

**Background Art**

A fuel cell is known, which generates electricity through electrochemical reaction using hydrogen gas and alcohol as fuel. The fuel cell is composed of an anode, a cathode, and an electrolyte membrane provided between them. The anode and the cathode include a catalyst made of metal such as platinum Pt, ruthenium Ru and a catalyst supporting material such as carbon. The fuel cell generates electricity by supplying the fuel to the anode and oxygen to the cathode.

In the fuel cell, when a hydrogen gas is supplied to the anode, an electrode reaction shown by the following reaction equation (1):

$$H^2 \rightarrow 2H^+ + 2e^- \qquad (1)$$

proceeds by the catalyst on the anode to produce protons ($H^+$), the protons reach the cathode via the electrolyte membrane, and the electrode reaction shown by a following reaction equation (2):

$$1/2O^2 + 2H^+ + 2e^- \rightarrow H_2O \qquad (2)$$

is initiated in the cathode.

In the fuel cell, when methanol is supplied to the anode, the electrode reaction expressed by the following reaction equation (3):

$$CH_3 OH + H_2 O \rightarrow 6H^+ + CO_2 + 6e^- \qquad (3)$$

proceeds to produce protons by the catalyst on the anode, the protons reach the cathode via the electrolyte membrane, and the electrode reaction expressed by a following reaction equation (4):

$$3/2O_2 + 6H^+ + 6e^- \rightarrow 3H_2O \qquad (4)$$

proceeds.

Since a fuel cell in which methanol is supplied directly to the anode, that is, so-called direct-methanol type fuel cell can produce hydrogen ion from alcohol aqueous solution, a reformer and the like are not required, which realize downsizing and weight reduction. Since liquid alcohol aqueous solution is used as fuel, the fuel cell is characterized in that energy density is exceedingly high.

It is known that its output is decreased because of stop or storage or continuous driving in such a direct-methanol type fuel cell. It is considered that output characteristics drop because a smooth electrochemical reaction is blocked due to desiccation of the electrolyte membrane and the electrode in a fuel cell in which a hydrogen gas is supplied as fuel.

In Japanese Laid Open Patent Application (JP-P2004-47427A), a fuel cell apparatus and a method for controlling a fuel cell are di.sclosed, in which a problem of output dropping in driving and in start-up can be prevented. In the fuel cell apparatus including an electric generation body composed of an oxidization electrode, a fuel electrode, and an electrolyte held between the oxidization electrode and the fuel electrode, a bypass circuit is provided to pass an electric current by electrically connecting the oxidization electrode and the fuel electrode when the output voltage of the fuel cell is a first predetermined value or less. That is to say, Japanese Laid Open Patent Application (JP-P2004-47427A) discloses that desiccation of the oxidization electrode can be suppressed and the electrolyte membrane can be kept in appropriately moistening condition by temporarily increasing an amount of generated water through increasing a load current or by suppressing air supply when output characteristics deteriorate (or an internal resistance value increases).

In Japanese Laid Open Patent Application (JP-P2003-536232A), a method of maintaining a performance of a fuel cell in high level for a long period is disclosed. The fuel cell includes a PEM as an electrolyte; an anode on one side surface of the PEM; a cathode on the other side surface of the PEM; an external electric circuit connected to the anode and the cathode; and a device mainly using electricity in this external electric circuit. An operation method includes (A) supplying hydrogen-containing fuel to the anode and oxygen-containing oxidant to the cathode so as to generate an electric current in the external circuit for a first predetermined time in order for the device to use primary electricity under an operational condition selected to maintain a cathode voltage over 0.66 volts for the first predetermined time and drop the cell performance; (B) revitalizing the cell after step A by supplying the hydrogen-containing fuel to the anode while operating the cell through a process selected to lower the cathode voltage to be less than 0.66 volts, and by maintaining the cathode voltage to be less than 0.66 volts for a second predetermined time sufficient for revitalizing at least a main part in degradation of the cell performance caused during the step A; (C) continuously repeating step A and step B to gradually alleviate the degradation of the cell performance. As a specific method for lowering the cathode voltage, there are disclosed a combination of disconnecting a normal external load (actually, an electric device using the fuel cell as a power supply) from the fuel cell, stopping the supply of the oxidant gas to the cathode, flowing inactive gas such as a nitrogen gas to the cathode, and connecting an auxiliary external resistance. In Japanese Laid Open Patent Application (JP-P2003-536232A), it is considered that changing of platinum catalyst into oxidized platinum is a cause of output degradation.

In Japanese Laid Open Patent Application (JP-P2003-77512A), it is disclosed that a twice output density can be obtained in a direct methanol type fuel cell, when methanol is supplied to an anode and then oxidant is supplied to a cathode in starting power generation, compared with a case that the procedure is reversed. In the methanol direct-type fuel cell, a perfluorocarbonsulfonate ion-exchange membrane is used as electrolyte, and cells are arranged in such a manner that the negative electrode and positive electrode of the cells on both sides of the ion-exchange membrane. Methanol aqueous solution of fuel is supplied to the negative electrode, and an oxidation gas is supplied to the positive electrode. In the driving method of the fuel cell, the methanol aqueous solution is supplied to the negative electrode and then the oxidation gas is supplied to the positive electrode in starting power generation. In Japanese Laid Open Patent Application (JP-P2003-77512A), it is also disclosed that, if an anode channel is filled with fuel or water in a stop state of the fuel cell, output density degradation can be prevented in next power generation.

In Japanese Laid Open Patent Application (JP-P2004-127618A), there is disclosed an electronic device system for controlling an amount of fuel supply in multiple steps by an auxiliary mechanism in a fuel cell. The electronic device system includes a cell unit, which includes a reaction section for generating power through chemical reaction, the auxiliary mechanism for supplying fuel used for the chemical reaction to the reaction section, a control section for controlling an amount of fuel supply in multiple steps, and an output section for outputting power generated by the reaction section. The electronic device system further includes an electronic device which includes an input section electrically connected to the output section and can operate based on power inputted via the input section.

In Japanese Laid Open Patent Application (JP-P2005-38791A), there is disclosed a power supply device whose exhaust is clean. The power supply device includes a fuel cell using methanol as fuel; a secondary cell for supplying electric power to a load; a fuel cell control section for controlling an amount of fuel and/or reacting air supplied to the fuel cell; a power converter for converting power outputted from the fuel cell into a predetermined voltage or electric current and supplying electric power to the load and/or the secondary cell; and a secondary cell remaining capacity detector for detecting a remaining capacity of the secondary cell. The fuel cell control section includes a plurality of power generation modes switched based on at least the remaining capacity of the secondary cell, and supplies the fuel cell with fuel of a constant amount per unit time which is different for every power generation mode.

In Japanese Laid Open Patent Application (JP-P2004-530259A), a system is disclosed which DMFC is rapidly increased to a temperature for optimum operation so that desired power can be generated as fast as possible. The direct oxidization type fuel cell system is a directly oxidizing fuel cell system. The system includes an electrolyte membrane arranged in a fuel electrode and an air electrode and between the fuel electrode and the air electrode; an air or oxygen source connected to the air el.ectrode; a carbonic fuel source; and a temperature adjusting system connected to the fuel source and the fuel electrode. The temperature adjusting system responds to temperature of the direct oxidization type fuel cell system, to increase fuel concentration in the fuel electrode, thereby to generate or increase oxidization in the crossovered fuel in the air electrode when the temperature is lower than predetermined temperature or in a temperature range, in order to promote crossover of fuel through the membrane and, to raise a temperature of the direct oxidization type fuel cell system.

**Disclosure of Invention**

An object of the present invention is to provide a fuel cell and a driving method of the fuel cell, in which degradation of output characteristics can be suppressed after a stop or a storage.

A fuel cell according to the present invention includes a fuel cell main assembly configured to generate power through chemical reaction of fuel and oxidant; and a fuel supplying unit. In this case, it is preferable to supply a liquid fuel to the fuel cell main assembly in a normal operation in which the power is supplied to an external load, and to supply the liquid fuel to the fuel cell main assembly to reduce an electrode of the fuel cell main assembly in a recovery operation after a stop state in which the fuel cell main assembly is not connected to any load.

It is preferable for the fuel supplying unit to supply the liquid fuel to the fuel cell main assembly in a normal pressure in the normal operation, and in a recovery pressure greater than the normal pressure in the recovery operation.

It is preferable for the fuel cell according to the present invention to further include a flow path resistance configured to exhaust the liquid fuel from the fuel cell main assembly in the normal operation and applies a pressure in the recovery operation such that the liquid fuel is not exhausted from the fuel cell main assembly.

The liquid fuel contains normal liquid fuel; and recovery liquid fuel whose concentration is higher than that of the normal liquid fuel. It is preferable for the fuel supplying unit to supply the normal liquid fuel to the fuel cell main assembly in the normal operation, and the recovery liquid fuel to the fuel cell main assembly in the recovery operation.

It is preferable for the fuel supplying unit to include a normal tank configured to store the normal liquid fuel; a recovery tank configured to store the recovery liquid fuel; and a valve configured to connect one of the normal tank and the recovery tank to the fuel cell main assembly.

It is preferable for the fuel supplying unit to include a low concentration liquid fuel tank configured to store a low concentration liquid fuel ; a high concentration liquid fuel tank configured to store a high concentration liquid fuel which is higher in fuel concentration than that of the low concentration liquid fuel; and a valve configured to mix the low concentration liquid fuel and the high concentration liquid fuel to produce one of the normal liquid fuel and the recovery liquid fuel.

It is preferable for the fuel cell according to the present invention to further include an oxidant supplying unit configured to supply an oxidant gas containing the oxidant to the fuel cell main assembly in the normal operation, and to reduce a supply quantity of the oxidant gas in the recovery operation to a less quantity than in the normal operation.

It is preferable for the fuel cell according to the present invention to further include a thermometer configured to measure a temperature of an electrolyte membrane of the fuel cell main assembly. In this case, the recovery operating is performed when the temperature of the electrolyte membrane is higher than a predetermined temperature.

It is preferable for the fuel cell according to the present invention to further include a heater configured to heat the electrolyte membrane when the temperature of the electrolyte membrane is higher than the predetermined temperature.

It is preferable for the fuel cell according to the present invention to further include an internal load configured to consume the power in the recovery operation.

It is preferable for the fuel cell according to the present invention to further include an auxiliary power supply configured to supply power to the external load in the recovery operation.

It is preferable for the fuel cell according to the present invention to further include a counter configured to count the number of times of the recovery operation after the stop state. In this case, the fuel supplying unit supplies the recovery liquid fuel to the fuel cell main assembly in the recovery operation such that a higher concentration of the recovery liquid fuel is supplied when the number of times is larger.

It is preferable for the fuel cell according to the present invention to further include a counter configured to count the number of times of the recovery operation after the stop state. In this case, the fuel supplying unit supplies the recovery liquid fuel to the fuel cell main assembly in the recovery operation such that a higher concentration of the recovery liquid fuel is supplied when the number of times is larger.

It is preferable for an electronic device according to the present invention to include a fuel cell according to the present invention; and an external load.

A driving method of a fuel cell according to the present invention is a method in which power is generated from a liquid fuel containing fuel and oxidant by a fuel cell main assembly. It is preferable for the driving method for fuel cell to include performing a start-up operation which is started after a stop state in which a load is not connected the fuel cell main assembly; performing a recovery operation in which the liquid fuel is supplied to the fuel cell main assembly such that an electrode of the fuel cell main assembly is reduced after the start-up operation; and performing a normal operation in which the power is supplied to an external load.

A pressure of a recovery liquid fuel as the liquid fuel supplied to the fuel cell main assembly in the recovery operation is larger than a pressure of a normal liquid fuel as the liquid fuel supplied to the fuel cell main assembly in the normal operation.

A concentration of a recovery liquid fuel as the liquid fuel supplied to the fuel cell main assembly in the recovery operation is higher than a concentration of a normal liquid fuel as the liquid fuel supplied to the fuel cell main assembly in the normal operation.

A concentration of a recovery liquid fuel as the liquid fuel supplied to the fuel cell main assembly in the recovery operation is higher than a concentration of a normal liquid fuel as the liquid fuel supplied to the fuel cell main assembly in the normal operation, and a pressure of the recovery liquid fuel is larger than a pressure of the normal liquid fuel.

It is preferable that a concentration of a start-up liquid fuel as the liquid fuel supplied to the fuel cell main assembly in the start-up operation is almost equal to a concentration of a normal liquid fuel as the liquid fuel supplied to the fuel cell main assembly in the normal operation.

It is preferable that a pressure of a start-up liquid fuel as the liquid fuel supplied to the fuel cell main assembly in the start-up operation is almost equal to a pressure of a normal liquid fuel as the liquid fuel supplied to the fuel cell main assembly in the normal operation.

It is preferable that the recovery operation is performed when an output voltage of the fuel cell main assembly in the start-up operation is smaller than a threshold voltage.

It is preferable for the driving method for fuel cell to further include performing another start-up operation when an output voltage of the fuel cell main assembly is smaller than the predetermined voltage in the recovery operation. In this case, the recovery operation is performed when the output voltage of the fuel cell main assembly is smaller than the threshold voltage in the other start-up operation. The normal operation is performed when the output voltage of the fuel cell main assembly is larger than the threshold voltage in the other start-up operation.

It is preferable that the concentration of the recovery liquid fuel is higher when the number of times of the recovery operation after a stop state is larger.

It is preferable that the pressure of the recovery liquid fuel is higher when the number of times of the recovery operation after the stop state is larger.

It is preferable for the driving method for fuel cell according to the present invention to further include performing a heating operation in the start-up operation when a temperature of an electrolyte membrane of the fuel cell main assembly is lower than a predetermined temperature. In this case, the recovery operation is performed when the temperature of the electrolyte membrane is higher than the predetermined temperature.

It is preferable for the heating operation to heat the electrolyte membrane by supplying the liquid fuel whose concentration is higher than that of the start-up liquid fuel, to the fuel cell main assembly.

The fuel cell includes a heater. The electrolyte membrane is heated by the heater.

It is preferable that the normal operation is performed when the temperature of the electrolyte membrane is higher than the predetermined temperature.

It is preferable that the performing the normal operation includes supplying the power to an internal load without supplying the power to the external load.

It is preferable that the normal operation is not performed when the recovery operation has been performed more than a predetermined number of times after the stop state.

It is preferable to generate an alarm to a user when the recovery operation is performed more than a predetermined number of times after the stop state.

It is preferable for the normal operation not to be performed when the recovery operation is performed more than a predetermined number of times.

It is preferable to generate an alarm to a user when the recovery operation is performed more than a predetermined number of times.

According to the fuel cell and the driving method of the fuel cell, degradation of output characteristics can be suppressed after a stop or a storage.

**Brief Description of Drawings**

FIG. 1 is a block diagram showing an embodiment of a fuel cell according to the present invention;
FIG. 2 is a block diagram showing an oxidant supplying unit, a fuel supplying unit, and a flow path resistance;
FIG. 3 is a cross section view showing a body of the fuel cell;
FIG. 4 is a block diagram showing a control device;
FIG. 5 is a flowchart showing an embodiment of a driving method for fuel cell according to the present invention;
FIG. 6 is a graph showing an output voltage of the body of the fuel cell;
FIG. 7 is a block diagram showing another embodiment of a fuel cell according to the present invention;
FIG. 8 a block diagram showing additionally other embodiment of a fuel cell according to the present invention;
FIG. 9 is a flowchart showing additionally other embodiment of a driving method for fuel cell according to the present invention;
FIG. 10 is a graph showing temperature changing of the body of the fuel cell;
FIG. 11 is a graph showing the output voltage of the body of the fuel cell;
FIG. 12 is a graph showing the output voltage of the body of the fuel cell; and
FIG. 13 is a graph showing the output voltage of the body of the fuel cell.

**Best Mode for Carrying Out the Invention**

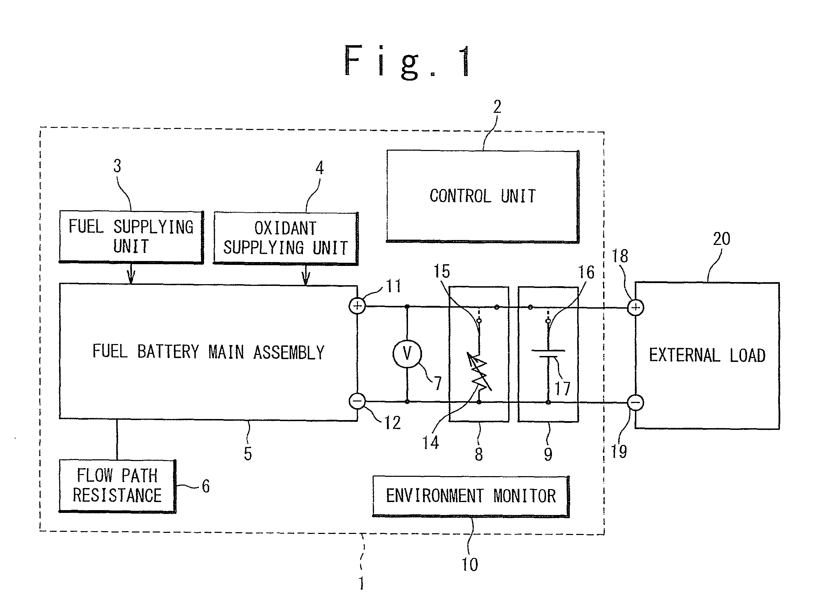

Hereinafter, a fuel cell according to embodiments of the present invention will be described with reference to the attached drawings. As shown in FIG. 1, a fuel cell 1 includes a control unit 2, a fuel supplying unit 3, an oxidant supplying unit 4, a fuel cell main assembly 5, a flow path resistance 6, a voltmeter 7, an internal load 8, an auxiliary power supply 9, and an environment monitor 10. The control unit 2 may be a computer, and is connected to the fuel supplying unit 3, the oxidant supplying unit 4, the flow path resistance 6, the voltmeter 7, the internal load 8, the auxiliary power supply 9, and the environment monitor 10 to communicate with them. The control unit 2 controls the fuel supplying unit 3, the oxidant supplying unit 4, the flow path resistance 6, the voltmeter 7, the internal load 8, the auxiliary power supply 9, and the environment monitor 10.

The fuel supplying unit 3 is controlled by the control unit 2 to supply liquid fuel to the fuel cell main assembly 5. The liquid fuel is liquid containing organic solvent as fuel composition. As the organic solvent, alcohol, ether, and liquid hydrocarbon are exemplified. As the alcohol, methanol and ethanol are exemplified. As the ether, dimethylether is exemplified. As the liquid hydrocarbon, cycloparaffin is exemplified. The liquid fuel may be an aqueous solution in which organic solvent is solved into water. To the liquid fuel, acid or alkali may be further added. In this case, the liquid fuel is preferable to improve ion conductivity of hydrogen ion.

The oxidant supplying unit 4 is controlled by the control unit 2 to supply oxidant to the fuel cell main assembly 5. As the oxidant, air and oxygen are exemplified. The fuel cell main assembly 5 has a plus output terminal 11 and a minus output terminal 12. The fuel cell main assembly 5 generates an electromotive force between the plus output terminal 11 and the minus output terminal 12 by using fuel supplied from the fuel supplying unit 3 and oxidant supplied from the oxidant supplying unit 4. The flow path resistance 6 is controlled by the control unit 2 to apply force to exhaust gas exhausted from the fuel cell main assembly 5 so that the exhaust gas cannot be exhausted.

The voltmeter 7 is electrically connected to the plus output terminal 11 and the minus output terminal 12, to measure a voltage between the plus output terminal 11 and the minus output terminal 12. The voltmeter 7 outputs the measured voltage to the control unit 2.

The fuel cell 1 further includes a fuel cell plus output terminal 18 and a fuel cell minus output terminal 19. The fuel cell 1 is mounted on, for example, an electronic device to be used. As the electronic device, a personal computer, a PDA, and a mobile phone are exemplified. The fuel cell 1 supplies electric power to the electronic device as the external load 20 via the fuel cell plus output terminal 18 and the fuel cell minus output terminal 19. In addition, a part of or all of functions of the control unit 2 may be incorporated into the electronic device when the fuel cell 1 is used as a power supply of the electronic device having information processing functions.

The internal load 8 includes a load switch 14 and an internal load 15. The load switch 14 is connected to the control unit 2 to communicate with it, and is connected among the plus output terminal 11, the internal load 15, and the fuel cell plus output terminal 18. The load switch 14 is controlled by the control unit 2 to electrically connect output termi.nal 11 to either the internal load 15 or the fuel cell plus output terminal 18. The internal load 15 is a variable resistance connected to the control unit 2 to communicate with it, and controlled by the control unit 2 to update a resistance value. The internal load 15 is connected between the load switch 14 and the minus output terminal 12. That is to say, the internal load 8 is controlled by the control unit 2 so that an electric load applied to the fuel cell main assembly 5 is adjusted.

The auxiliary power supply 9 includes a power supply switching circuit 16 and an auxiliary power supply section 17. The power supply switching circuit 16 is connected to the control unit 2 to be communicable with it, and is arranged among the plus output terminal 11, the auxiliary power supply section 17, and the fuel cell plus output terminal 18 to connect them. The load switch 14 electrically connects only either the plus output terminal 11 or the auxiliary power supply section 17 to the fuel cell plus output terminal 18 under the control by the control unit 2. The auxiliary power supply section 17 is arranged between the power supply switching circuit 16 and the minus output terminal 12 to connect them, and applies a voltage between the power supply switching circuit 16 and the minus output terminal 12. That is to say, the auxiliary power supply 9 is controlled by the control unit 2 to apply the voltage between the plus output terminal 11 and the minus output terminal 12. As the power supply, a secondary cell, various primary cells, a capacitor, various power generators are exemplified. As the secondary cell, a lithium-ion secondary cell is exemplified. As the electric power supply, the secondary cell is preferable in that surplus power generated by the fuel cell main assembly 5 can be accumulated.

The environment monitor 10 is a sensor for measuring an inside of the fuel cell main assembly 5, an inside of the fuel cell 1, an inside of an electronic device mounting the fuel cell 1, or an environmental state that the electronic device is installed, and outputs the measuring results to the control unit 2. As the environmental state, temperature, humidity, and barometric pressure are exemplified.

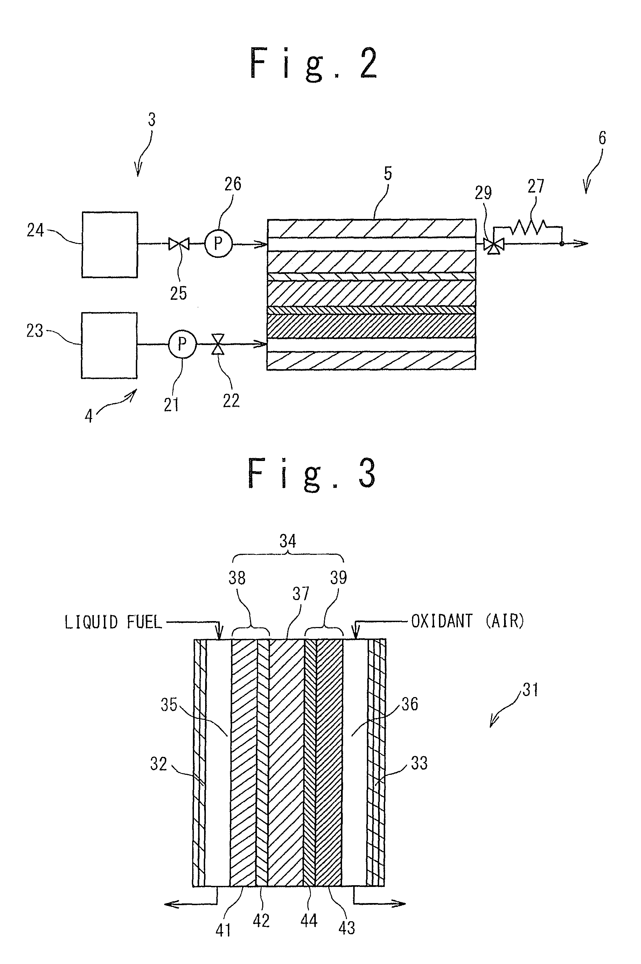

FIG. 2 shows the oxidant supplying unit 4. The oxidant supplying unit 4 includes a pump 21, a valve 22, and a tank 23. The tank 23 stores oxidant exemplified as oxygen. The pump 21 is connected to the control unit 2 to be communicable with it, and is controlled by the control unit 2 to pressurize the oxidant stored in the tank 23 and to supply it to the fuel cell main assembly 5. The valve 22 is connected to the control unit 2 to be communicable with it, and is controlled by the control unit 2 to open and close a flow path connecting the pump 21 and the fuel cell main assembly 5. In addition, as the pump 21, a pump able to prevent the air from being supplied to the fuel cell main assembly 5 can be applied. In this case, the fuel supplying unit 3 is not required to include the valve 21. In addition, the oxidant supplying unit 4 is not required to include the tank 23 since being able to replace the pump 21 by a fan when the fuel cell main assembly 5 uses environmental air as the oxidant.

FIG. 2 further shows the fuel supplying unit 3. The fuel supplying unit 3 includes a fuel tank 24, a valve 25, and a pump 26. The fuel tank 24 stores methanol aqueous solution. The valve 25 is connected to the control unit 2 to be communicable with it, and is controlled by the control unit 2 to open and close a flow path connecting the fuel tank 24 and the pump 26. The pump 26 is connected to the control unit 2 to be communicable with it, and is controlled by the control unit 2 to pressurize the methanol aqueous solution stored in the fuel tank 24 and to supply it to the fuel cell main assembly 5. In addition, as the pump 26, a pump able to prevent the methanol aqueous solution from being supplied to the fuel cell main assembly 5 can be applied. In this case, the fuel supplying unit 3 is not required to include the valve 25.

FIG. 2 further shows the flow path resistance 6. The flow path resistance 6 includes a flow path switching valve 29 and a flow path resistance 27. The flow path switching valve 29 is connected to the control unit 2 to be communicable with it, and is controlled by the control unit 2 to connect a flow path of exhaust gas from the fuel cell main assembly 5 to either one of the flow path resistance 27 and environments that the fuel cell 1 is installed. The flow path resistance 27 is a flow path through which fluid passes, and is a resistance for applying force so that the fluid cannot pass . In addition, the flow path resistance 6 can be replaced by a pressure adjuster which does not include the flow path switching valve 29 and the flow path resistance 27. The pressure adjuster is controlled by the control unit 2 to apply force so that the fluid cannot pass. As the pressure adjuster, a regulator is exemplified.

FIG. 3 shows the fuel cell main assembly 5. The fuel cell main assembly 5 includes at least a unit cell. The unit cell 31 includes a separator 32, a separator 33, and an electrode-electrolyte junction assembly 34. The electrode-electrolyte junction assembly 34 is also called MEA (Membrane and Electrode Assembly). In the unit cell 31, a fuel flow path 35 is formed between the separator 32 and the electrode-electrolyte junction assembly 34. The fuel flow path 35 is connected to the fuel supplying unit 3, and to the flow path resistance 6. In the unit cell 31, a fuel flow path 36 is formed between the separator 33 and the electrode-electrolyte junction assembly 34. The fuel flow path 36 is connected to the oxidant supplying unit 4.

The electrode-electrolyte junction assembly 34 includes a solid electrolyte membrane 37, an anode 38, and a cathode 39. The solid electrolyte membrane 37 is arranged between the anode 38 and the cathode 39 to fully fit with them. It is preferable that the solid electrolyte membrane 37 is a membrane with a high conductivity for hydrogen-ions since having a role to transfer hydrogen-ions between the anode 38 and the cathode 39. It is further preferable that the solid electrolyte membrane 37 is chemically stable and has high mechanical strength. As materials of the solid electrolyte membrane 37, organic polymer materials having a polar group are preferably used. As the polar group, a strong acid group and a mild acid group are exemplified. As the strong acid group, a sulfone group and a phosphate group are exemplified. As the mild acid group, a carboxyl group is exemplified.

As the organic polymer materials, an aromatic condensation polymer, a sulfonate group-containing perfluorocarbon, and a carboxyl group-containing perfluorocarbon are exemplified. As the aromatic condensation polymer, a sulfonated poly (4-phenoxybenzoyl-1, 4-phenilene) and an alkyl sulfonated polybenzimidazole are exemplified. As the sulfonate group-containing perfluorocarbon, "Nafion" (registered trademark) commercially available from Dupon and "Aciplex" commercially available from Asahi. Kasei are exemplified. As the carboxyl group-containing perfluorocarbon, "Flemion S-membrane" (registered trademark) commercially available from Asahi Glass is exemplified.

The anode 38 is formed by laminating two layers: an anode power collector 41 and an anode catalyst layer 42. The anode power collector 41 is arranged on a side of the fuel flow path 36 of the anode 38. The anode catalyst layer 42 is arranged between the anode power collector 41 and the solid electrolyte membrane 37, contacts the anode power collector 41, and contacts the solid electrolyte membrane 37. The anode power collector 41 is formed of a conductive porous material, and formed in plates. As the porous material, a carbon paper, a carbon compact, a carbon sintered compact, a sintered metal, and a foam material are exemplified.

The anode catalyst layer 42 is formed of material containing a catalyst. As the catalysts, a single metal and an alloyed metal are exemplified. As the single metal, platinum, gold, silver, ruthenium, rhodium, palladium, osmium, iridium, cobalt, nickel, rhenium, lithium, lanthanum, strontium, and yttrium are exemplified. As alloy, exemplified are alloy made of a plurality of metals selected from the group consisting of platinum, gold, silver, ruthenium, rhodium, palladium, osmium, iridium, cobalt, nickel, rhenium, lithium, lanthanum, strontium, and yttrium.

The cathode 39 is formed by laminating two layers: a cathode power collector 43 and a cathode catalyst layer 44. The cathode power collector 43 is arranged on a side of the oxidant flow path 37 of the cathode 39. The cathode catalyst layer 44 is arranged between the cathode power collector 43 and the solid electrolyte membrane 37, contacts the cathode power collector 43, and contacts the solid electrolyte membrane 37. It is formed of a conductive porous material, and formed in plates. As the porous material, a carbon paper, a carbon compact, a carbon sintered compact, a sintered metal, and a foam material are exemplified.

The cathode catalyst layer 44 is formed of material containing catalyst. As the catalysts, a single metal and an alloy are exemplified. As the single metal, platinum, gold, silver, ruthenium, rhodium, palladium, osmium, iridium, cobalt, nickel, rhenium, lithium, lanthanum, strontium, and yttrium are exemplified. As the alloyed metal, exemplified are alloyed metals made of a plurality of metals selected from platinum, gold, silver, ruthenium, rhodium, palladium, osmium, iridium, cobalt, nickel, rhenium, lithium, lanthanum, strontium, and yttrium. In this case, the catalyst contained in the cathode catalyst layer 44 may be same as and different from the catalyst contained in the anode catalyst layer 42.

It should be noted that the unit cell 31 is allowed to be formed so that the cathode power collector 43 can be exposed to the environment when the fuel cell main assembly 5 generates power by using air. In this case, the fuel cell 1 is not required to include the oxidant supplying unit 4.

When including a plurality of the unit cells 31, the fuel cell main assembly 5 is formed as a stack lamination type, in which a plurality of the unit cells 31 are stacked in parallel, formed in a flat stack type in which a plurality of the unit cells 31 are arranged on the same plane, or formed in a shape in which a plurality of the cell layers formed in the flat stack type are further stacked. In this case, the anode power collector 41 and the cathode power collector 43 are connected each other so that the unit cells 31 can be connected in series, or the unit cells 31 can be connected in parallel.

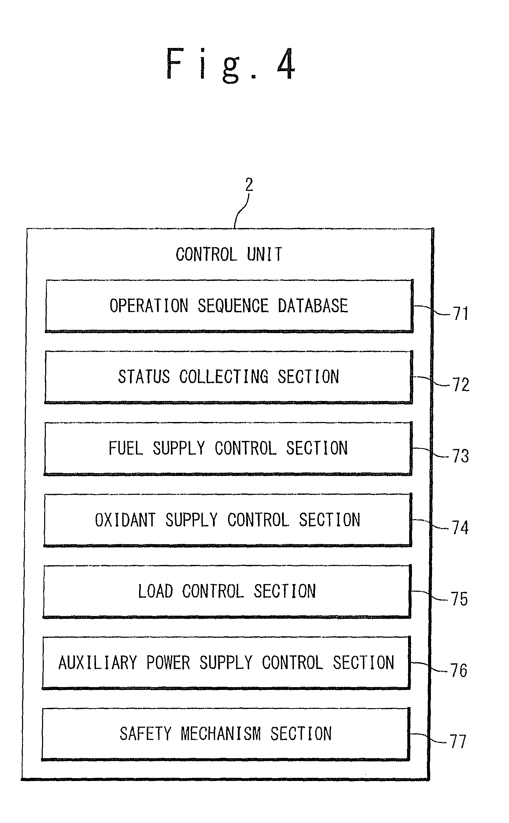

FIG. 4 shows the control unit 2. The control unit 2 is a computer and includes a CPU, a storage unit, and input/output units (not shown). The CPU controls the storage unit and the input/output unit by executing computer programs installed in the control unit 2. The storage unit stores computer programs and stores data generated by the CPU. The input/output unit outputs data generated through a user operation to the CPU and outputs data generated by the CPU to the user in a state that the data can be recognized. Further, the input/output unit collects data from the voltmeter 7 and the environment monitor 10, and outputs data to the fuel supplying unit 3, the oxidant supplying unit 4, the flow path resistance 6, the internal load 8, and the auxiliary power supply 9.

In the control unit 2, an operation sequence database 71, a status collecting section 72, a fuel supply control section 73, an oxidant supply control section 74, a load control section 75, an auxiliary power supply control section 76, and a safety mechanism section 77 are installed as computer program (s).

The operation sequence database 71 records a table for relating a status of the fuel cell 1 in sequence in the storage unit.

The status collecting section 72 collects the status of the fuel cell 1 measured by the environment monitor 10.

Referring to a table recorded in the operation sequence database 71, the fuel supply control section 73 controls the fuel supplying unit 3 and the flow path resistance 6 as shown in the sequence corresponding to a status collected by the status collecting section 72. For example, when the fuel cell 1 performs a start-up operation or a normal operation, the fuel supply control section 73 passes liquid fuel through the fuel flow path 35 by switching the flow path switching valve 29 of the flow path resistance 6 so that the fuel flow path 35 can be connected to the environment, opening the valve 25 of the fuel supplying unit 3, and operating the pump 26 of the fuel supplying unit 3. When the fuel cell 1 performs a recovery operation, the fuel supply control section 73 applies pressure for the liquid fuel flowing through the fuel flow path 35 by switching the flow path switching valve 29 of the flow path resistance 6 so that the fuel flow path 35 can be connected to the flow path resistance 27, opening the valve 25 of the fuel supplying unit 3, and operating the pump 26 of the fuel supplying unit 3.

Referring to the table recorded by the operation sequence database 71, the oxidant supply control section 74 controls the oxidant supplying unit 4 as shown in the sequence corresponding to the status collected by the status collecting section 72. For example, when the fuel cell 1 performs a start-up operation or a normal operation, the oxidant supply control section 74 passes oxidant through an oxidant flow path 36 by opening the valve 22 of the oxidant supplying unit 4 and operating the pump 54. For example, when the fuel cell 1 performs the recovery operation, the oxidant supply control section 74 does not supply oxidant for the oxidant flow path 36 by closing the valve 22 of the oxidant supplying unit 4.

Referring to the table recorded by the operation sequence database 71, the load control section 75 controls the internal load 8 as shown in the sequence corresponding to the status collected by the status collecting section 72. For example, when the fuel cell 1 performs the start-up operation or the recovery operation, the load control section 75 switches the load switch 14 so that the fuel cell main assembly 5 can be connected only to the internal load 15 having a low resistance. When the fuel cell 1 operates the normal operation, the load control section 75 switches the load switch 14 so that the fuel cell main assembly 5 is connected only to the external load 20.

Referring to the table recorded by the operation sequence database 71, the auxiliary power supply control section 76 controls the auxiliary power supply 9 as shown in the sequence corresponding to the status collected by the status collecting section 72. For example, when the fuel cell 1 performs the start-up operation or the recovery operation, the auxiliary power supply control section 76 controls the load switch 14 to electrically connect the auxiliary power supply section 17 to the fuel cell plus output terminal 18. When the fuel cell 1 operates the normal operation, the auxiliary power supply control section 76 controls the load switch 14 to electrically connect the plus output terminal 11 to the fuel cell plus output terminal 18.

The safety mechanism section 77 includes an accumulation counter for counting the total number of times of the recovery operation and for recording it, and an operation counter for counting the number of times of the recovery operation performed from the operation stop to the normal operation and for recording it into the storage unit. Further, the safety mechanism section 77 records the maximum accumulated number of the operations and the maximum number of operations into the storage unit. When the accumulated number of performances of operations reaches the maximum accumulated number of the operations, the safety mechanism section 77 forcibly stops the operation of the fuel cell 1, or generates an alarm showing that the fuel cell 1 cannot perform the normal operation by using the input/output unit.

When the accumulated number of performances of operations reaches the maximum accumulated number of the operations, the safety mechanism section 77 forcibly stops the operation of the fuel cell 1, or generates an alarm showing that the fuel cell 1 cannot perform the normal driving by using the input/output unit. When the electronic device mounting the fuel cell 1 includes a sound source or a display device, it is preferable that the alarm showing that the fuel cell 1 cannot perform the normal operation is outputted to make it possible for a user to recognize by using the sound source or the display device.

According to such a control unit 2, by previously recording a procedure into the storage unit by using the operation sequence database 71, a use can allow the fuel cell 1 to perform the operation in accordance with the procedure.

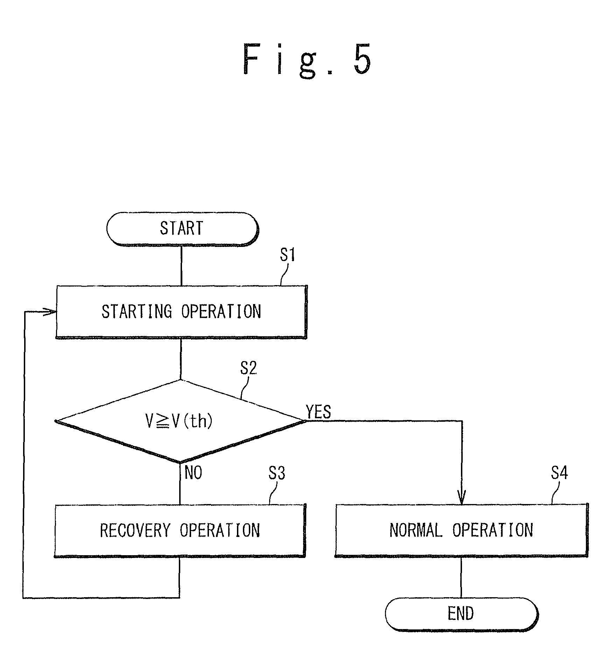

FIG. 5 shows a method of driving a fuel cell according to the present invention. At first, the fuel cell 1 performs the start-up operation when starting-up from the stop state and generating power (step S1). That is to say, in the fuel cell 1, the load switch 14 is switched so that the fuel cell main assembly 5 is connected only to the internal load 15 with low resistance, and supplies liquid fuel and oxidant to the fuel cell main assembly 5 in the same condition as in the normal operation. In this case, the fuel cell 1 opens the valve 22 of the oxidant supplying unit 4, operates the pump 54, and passes the oxidant through the oxidant flow path 36. Further, the fuel cell 1 passes liquid fuel through the fuel flow path 35 by switching the flow path switching valve 29 of the flow path resistance 6 so that the fuel flow path 35 can be connected to the environment, opening the valve 25 of the fuel supplying unit 3, and operating the pump 26 of the fuel supplying unit 3. The fuel cell 1 measures an output voltage of the fuel cell main assembly 5 by using the voltmeter 7. At this moment, electrons are generated by reduction reaction progressing in the anode 38 when the fuel cell main assembly 5 is in an open circuit state, move to the cathode 39, and decreases a voltage of the cathode 39 drops.

In addition, replacing the fuel cell main assembly 5 by the internal load 15, the fuel cell 1 can be also connected to the external load 20 in the start-up operation. However, since there is a problem in stability of the output voltage of the fuel cell main assembly 5 at the start-up operation, it is preferable to connect the internal load 15 rather than the external load 20 to the fuel cell main assembly 5 when the external load 20 is especially an electronic device requiring stable supply of electric power.

When the output voltage V of the fuel cell main assembly 5 indicates almost a constant value, the fuel cell 1 compares the output voltage V at that time with a threshold voltage Vth (step S2). When the output voltage V is the threshold voltage Vth or less (step S2, NO), the fuel cell 1 performs the recovery operation. That is to say, in the fuel cell 1, the load switch 14 is switched to connect only the internal load 15 to the fuel cell main assembly 5. Further, the fuel cell 1 stops the pump 21 of the oxidant supplying unit 4, closes the valve 22, and stops supplying oxidant to the fuel cell main assembly 5. Furthermore, the fuel cell 1 applies pressure to liquid fuel passing through the fuel flow path 35 by switching the flow path switching valve 29 so that the fuel flow path 35 can be connected to the flow path resistance 27, opening the valve 25 of the fuel supplying unit 3, and operating the pump 26 of the fuel supplying unit 3.

The metal catalyst contained in the cathode catalyst layer 44 forms oxides or hydroxides or adsorbs oxygen on its surface in a stop state. In the recovery operation, the surface of the metal catalyst is reduced, and the metal catalyst is activated again.

When the output voltage V is less than a predetermined voltage Vr (for example, 0.3V), the fuel cell 1 performs the start-up operation again. It should be noted that when the output voltage V is 0V or after the output voltage has been held in 0V for a predetermined time, the fuel cell 1 also can perform the start-up operation again. The fuel cell 1 apparently recovers its output voltage when performing the recovery operation for the predetermined time, that is, from time t2 to time t3, while keeping the output voltage V to 0.3V or less. A recovering effect of the output voltage per the recovery operation deteriorates if continuing the operation more. That is to say, if performing the recovery operation again after returning to the start-up operation at time t3 rather than taking long time for one recovery operation, time required to recover the output voltage can be short and is preferable.

When the output voltage V is larger than the threshold voltage Vth (step S2, YES), the fuel cell. 1 performs the normal operation (step S4). The normal operation is in a usual state that the external load 20 is connected to the fuel cell main assembly 5. When the external load 20 is, for example, an electronic device 20, the state shows that the electronic device is being used. That is to say, in the fuel cell 1, the load switch 14 is switched so that the external load 20, instead of the internal load 15, can be connected to the fuel cell main assembly 5, and supplies liquid fuel and oxidant to the fuel cell main assembly 5 under a predetermined condition. In this case, the fuel cell 1 passes the oxidant through the oxidant flow path 36 by opening the valve 22 of the oxidant supplying unit 4 and operating the pump 54. Further, the fuel cell 1 passes the liquid fuel through the fuel flow path 35 by switching the flow path switching valve 29 of the flow path resistance 6 so that the fuel flow path 35 can be connected to the environment, opening the valve 25 of the fuel supplying unit 3, and operating the pump 26 of the fuel supplying unit 3.

The recovery operation actively generates crossover for transmitting the solid electrolyte membrane 37 from the anode 38 and osmosing it into the cathode 39. For this reason, the recovery operation applies a load to the fuel cell main assembly 5 (especi.ally, the MEA 37). According to these operations, the fuel cell 1 can prevent excessive load from being imposed on the fuel cell main assembly 5 and the MEA 37. Since the cathode catalyst layer 44 cannot be activated again even if the recovery operation is performed without performing the start-up operation, the output voltage of the fuel cell main assembly 5 also cannot be recovered. According to these operations, the cathode catalyst layer 44 is certainly activated again.

In the method of driving a fuel cell according to the present invention, the fuel cell 1 further counts the accumulated number of the performances of all the recovery operation, and counts the number of performances of the recovery operation performed from the stop state to the normal operation. When the accumulated number of the performances reaches the maximum number of the performances recorded in the storage unit, the fuel cell 1 forcibly stops the operation of the fuel cell 1 or generates an alarm to show that the fuel cell 1 cannot performs the normal operation by using the input/output unit. When the number of the performances reaches the maximum number of the performances recorded in the storage unit, the fuel cell 1 forcibly stops the operation of the fuel cell 1 or generates an alarm to show that the fuel cell 1 cannot performs the normal operation by using the input/output unit. When the electronic device mounting the fuel cell 1 includes a sound source or a display device, it is preferable that the alarm showing that the fuel cell 1 cannot perform the normal operation is outputted to make it possible for a user to recognize by using the sound source or the display device.

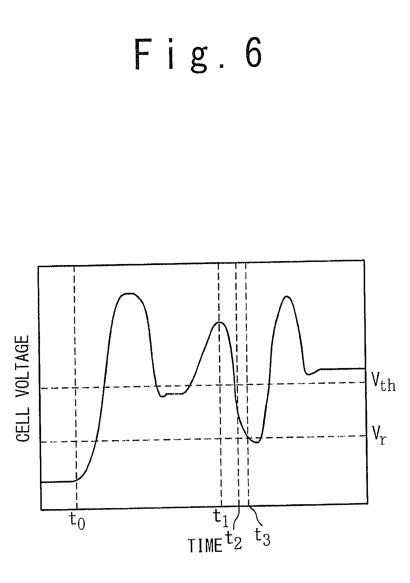

FIG. 6 shows the output voltage of the fuel cell main assembly 5 measured by the voltmeter 7 during performance of the method of driving a fuel cell according to the present invention. The output voltage V shows 0V from a stop state to time t0 when the start-up operation begins. The output voltage V rises when the start-up operation begins, drops after that, and unsteadily varies with time. After that, the variation temporarily stops, and the output voltage V becomes constant. The fuel cell 1 switches the start-up operation to the recovery operation when a constant output voltage V is smaller than the threshold voltage Vth.

The fuel cell main assembly 5 stops power generation because the supply of oxidant stops when the recovery operation begins, and the output voltage V drops to a predetermined voltage Vr after time t1 when the recovery operation begins. The fuel cell 1 begins the start-up operation again at time t3 when the output voltage V becomes smaller than the predetermined voltage Vr through the recovery operation. The output voltage V rises again when the start-up operation begins, drops after that, and unsteadily varies with time. The variation temporarily stops and the output voltage V becomes constant. The fuel cell 1 switches the start-up operation to the recovery operation when the constant output voltage V is smaller than the threshold voltage Vth. The fuel cell 1 switches the start-up operation to the normal operation when the constant output voltage V is larger than the threshold voltage Vth.

The driving method of a fuel cell according to the present invention actively generates the crossover by pressurizing fuel supplied to the anode. For this reason, in the fuel cell 1, even when the output voltage V reaches the threshold voltage Vth or more at the last start-up operation, the output voltage may be unstable if the start-up operation is immediately switched to the normal operation. In this case, the fuel cell 1 can avoid an unstable output voltage by further performing the start-up operation by one more time only for a predetermined time after the output voltage V becomes the threshold voltage Vth or more in the start-up operation. These start-up operations are preferable when an electronic device requiring stability of the output voltage is an external load.

A recovering mechanism of the output voltage in the driving method of a fuel cell according to the present invention is considered as follows. Since both the control unit 2 and the internal load 15 are not connected while the fuel cell main assembly 5 is stopped, the connection between the anode 38 and the cathode 39 is in an open-circuit state. Since electrons generated in the anode 38 by electrode reaction (3) do not move to the cathode 39, and, on the other hand, oxidant immediately after stopping remains in the oxidant flow path 36, the voltage of the cathode rises and exceeds an oxidation potential at which a catalyst composing the cathode catalyst layer 44 changes into oxide and the like. If this state is maintained, the catalyst composing the cathode catalyst layer 44 sequentially changes from its surface. Since electrons move from the anode 38 to the cathode 39 by the start-up operation performed immediately after operation of the fuel cell 1 begins, the potential of the cathode drops and reaction fields where water is produced by oxygen atoms or molecules, hydrogen ions, and electrons are formed on a surface of the cathode catalyst layer 44. Since electrode reaction (4) proceeds when oxygen is supplied even after the reaction fields has been formed, recovery in low-active region on the surface of the cathode catalyst layer 44 scarcely proceeds. When switching a load to the internal load 15 to set a state that overcurrent flows and stopping the supply of oxygen, the voltage drops to a level at which oxygen of the low-active region can react (assumed that this state is realized at the time t2) and consumption of oxygen in the low-active region proceeds. Furthermore, through crossover of organic solvent component in liquid fuel, the same electrode reaction (3) as the anode can take place also in the cathode, and reaction of generated hydrogen ions and electrons with the low-active region is accelerated. In addition, recovery for the low-active region on the surface of the cathode catalyst layer 44 can be rapidly and steadily realized as a result. Therefore, it is important to perform the start-up operation and the recovery operation successively in order to recover the low-active region.

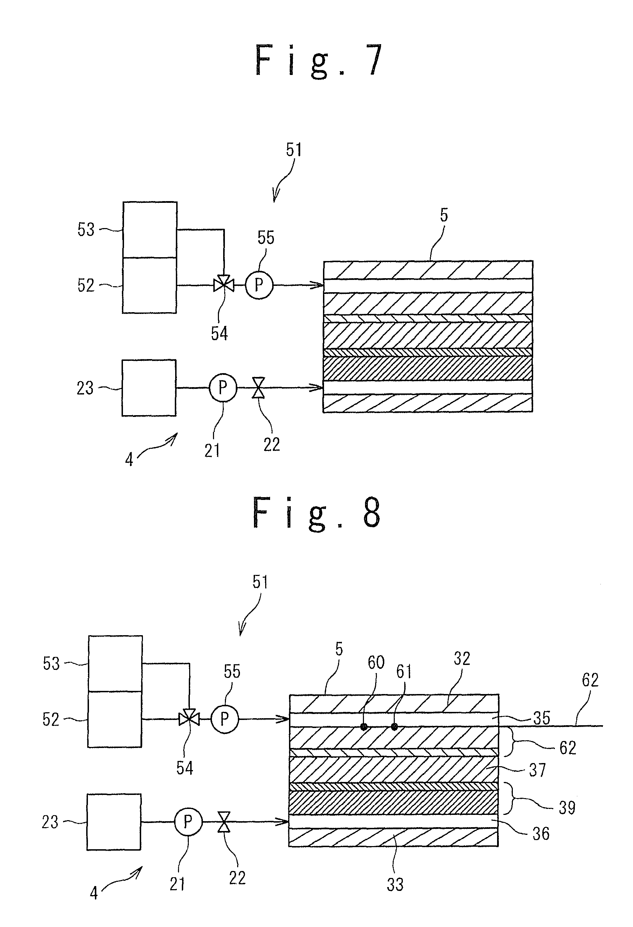

In the fuel cell according to another embodiment of the present invention, the fuel supplying unit 3 in the above-described embodiment is replaced by another fuel supplying unit, and the flow path resistance 6 is deleted. As shown in FIG. 7, the fuel supplying unit 51 includes a first fuel tank 52, a second fuel tank 53, a valve 54, and a pump55. The first fuel tank 52 stores methanol aqueous solution. Concentration of the methanol aqueous solution is suitable for being supplied to the fuel cell main assembly 5 in the normal operation. The second fuel tank 53 stores methanol aqueous solution. Concentration of the methanol aqueous solution is higher than that of the methanol aqueous solution stored in the first fuel tank 52.

The valve 54 is connected to the control unit 2 to be communicable with it, and is controlled by the control unit 2 to connect either the first fuel tank 52 or the second fuel tank 53 to the pump 55. The pump 55 is connected to the control unit 2 to be communicable with it, and is controlled by the control unit 2 to pressurize methanol aqueous solution, and supply it to the fuel cell main assembly 5 through the valve 54.

In the driving method of a fuel cell according to this embodiment of the present invention is performed by the fuel cell 1 to which such a fuel supplying unit 51 is applied, and an operation for supplying liquid fuel to the fuel cell main assembly 5 by the driving method of a fuel cell in the above mentioned embodiment is replaced by another operation. That is to say, the fuel cell 1 performs the start-up operation at first when generating power after starting-up from a stop state. In this case, in the fuel cell 1, the load switch 14 is switched so that the fuel cell main assembly 5 is connected only to the internal load 15 with low resistance, and supplies liquid fuel and oxidant to the fuel cell main assembly 5 under the same condition as the normal operation. At this moment, the fuel cell 1 passes the oxidant through the oxidant flow path 36 by opening the valve 22 of the oxidant supplying unit 4 and operating the pump 54. Further, the fuel cell. 1 passes the liquid fuel through the fuel flow path 35 by switching the valve 54 of the fuel supplying unit 51 so that the first fuel tank 52 is connected to the pump 55, and operating the pump 55 of the fuel supplying unit 51. The fuel cell 1 measures the output voltage of the fuel cell main assembly 5 by using the voltmeter 7. At this moment, electrons generated by reduction reaction proceeding in the anode 38 when the fuel cell main assembly 5 is in an open circuit state move to the cathode 39, and the electric potential of the cathode 39 drops.

When an output voltage V of the fuel cell main assembly 5 indicates almost a constant value, the fuel cell 1 compares the output voltage V at that time with the threshold voltage Vth. When the output voltage V is the threshold voltage Vth or less, the fuel cell 1 performs the recovery operation. That is to say, in the fuel cell 1, the load switch 14 is switched to connect only the internal load 15 to the fuel cell main assembly 5. Further, the fuel cell 1 stops the pump 21 of the oxidant supplying unit 4, closes the valve 22, and stops supplying oxidant to the fuel cell main assembly 5. Furthermore, the fuel cell 1 passes high concentration methanol aqueous solution through the fuel flow path 35 by switching the valve 54 of the fuel supplying unit 51 so that the second fuel tank 53 is connected to the pump 55, and operating the pump 55 of the fuel supplying unit 51. If the high concentration liquid fuel passes through the fuel flow path 35 as described above, the same effectiveness as the fuel cell 1 including the fuel supplying unit 3 in the above mentioned embodiment can be obtained since an amount of organic fuel component crossovered with the cathode 39 increases.

In the stop state, the metal catalyst contained in the cathode catalyst layer 44 forms oxide or hydroxides or adsorbs oxygen on its surface. In the recovery operation, the surface of the metal catalyst is reduced, and the metal catalyst is activated again.

When the output voltage V is less than the predetermined voltage Vr (for example, 0.3V), the fuel cell 1 performs the start-up operation again. In addition, when the output voltage V is 0V or after the output voltage V has been held in 0V for a predetermined time, the fuel cell 1 also can perform the start-up operation again.

When the output voltage V is larger than the threshold voltage Vth (step S2, YES), the fuel cell 1 performs the normal operation (step S4). The normal operation is a usual state that the external load 20 is connected to the fuel cell main assembly 5, and when the external load 20 is, for example, an electronic device, the electronic device is used. That is to say, in the fuel cell 1, the load switch 14 is switched so that the external load 20, instead of the internal load 15, is connected to the fuel cell main assembly 5, and supplies liquid fuel and oxidant to the fuel cell main assembly 5 under a predetermined condition. In this case, the fuel cell 1 passes the oxidant through the oxidant flow path 36 by opening the valve 22 of the oxidant supplying unit 4 and operating the pump 54. Further, the fuel cell 1 passes the liquid fuel through the fuel flow path 35 by switching the valve 54 of the fuel supplying unit 51 so that the first fuel tank 52 is connected to the pump 55, and operating the pump 55 of the fuel supplying unit 51.

It should be noted that the fuel supplying unit 51 can also supply a plurality of liquid fuels stored in the first fuel tank 52 and the second fuel tank 53 to the fuel cell main assembly 5 while changing a mixing ratio by using the valve 54. In this case, the first fuel tank 52 stores liquid fuel with low concentration (for example, water) and the second fuel tank 53 stores liquid fuel with high concentration (for example, methanol). It is preferable for the fuel supplying unit 51 to include a mixture tank for further mixing liquid fuels stored in a plurality of the fuel tanks in order to homogenize the concentration. Furthermore, the fuel cell 1 also can include the flow path resistance 6 in the above-mentioned embodiment and employ a method for supplying liquid fuel with the high concentration of organic fuel component after pressurizing it in the recovery operation.

The driving method of a fuel, cell according to the present embodiment positively generates the crossover by supplying liquid fuel with high concentration organic fuel component. Transmitivity or permeable characteristic of liquid fuel through a solid polymer electrolyte composing the electrode-electrolyte junction assembly 34 increases with increase of concentration of organic fuel component in the liquid fuel. In the present embodiment, this permeable characteristic is utilized.

Although present in any solid polymer electrolyte, the permeable characteristic depends on a kind of the solid polymer electrolyte. It is preferable for the electrode-electrolyte junction assembly 34 to include a solid polymer electrolyte whose permeable amount of organic fuel component quickly increases when liquid fuel of a higher concentration than that in the normal generation (for example, higher concentration by 5 - 10%) is supplied because a control for promoting crossover in the recovery operation and suppressing the crossover in the normal generation can be easily realized. If formed of material containing aromatic polymer having ether bond, the electrolyte membrane is superior in controlling the crossover. In addition, controllability of the crossover can be improved by containing material other than the solid polymer electrolyte in the electrode-electrolyte junction assembly 34. As the material realizing this, sulfonate group-containing styrene-divinylbenzene polymer is exemplified. In addition, controllability of the crossover can be improved by containing different solid polymer electrolytes in the anode 38, the solid electrolyte membrane 37, and the cathode 39.

In the fuel cell according to another embodiment of the present invention, the fuel supplying unit 3 in the above described embodiment is replaced by another fuel supplying unit, the flow path resistance 6 is deleted, and a heater and a thermometer are added. As shown in FIG. 8, the fuel supplying unit 51 includes a first fuel tank 52, a second fuel tank 53, a valve 54, and a pump 55. The first fuel tank 52 stores methanol aqueous solution. Concentration of the methanol aqueous solution is suitable for being supplied to the fuel cell main assembly 5 in the normal operation. The second fuel tank 53 stores methanol aqueous solution. Concentration of the methanol aqueous solution is higher than that of the methanol aqueous solution stored in the first fuel tank 52.

The valve 54 is connected to the control unit 2 to be communicable with it, and is controlled by the control unit 2 to connect either the first fuel tank 52 or the second fuel tank 53 to the pump 55. The pump 55 is connected to the control unit 2 to be communicable with it, and is controlled by the control unit 2 to pressurize methanol aqueous solution, and supply it to the fuel cell main assembly 5 through the valve 54.

The heater 60 is arranged in the vicinity of the solid electrolyte membrane 37 of the fuel cell main assembly 5, and is connected to the control unit 2 to be communicable with it. The heater 60 is controlled by the control unit 2 to heat the solid electrolyte membrane 37. In addition, the heater 60 may be arranged in a pipe for supplying liquid fuel to the fuel cell main assembly 5. In this case, the heater 60 heats the solid electrolyte membrane 37 by heating liquid fuel just before being supplied to the fuel cell main assembly 5.

The thermometer 61 is arranged on a surface of the anode 38 in the fuel flow path 35 of the fuel cell main assembly 5, or arranged on a surface of the cathode in the oxidant flow path 36. Further, the thermometer 61 is connected to the control unit 2 via an electric wire 62 to be communicable with it. The thermometer 61 measures temperature of the solid electrolyte membrane 37, and outputs the temperature to the control unit 2. Furthermore, the thermometer 61 can be arranged on a position other than the vicinity of the solid electrolyte membrane 37 so that temperature with high relativity to temperature of the solid electrolyte membrane 37 can be measured. For example, the thermometer 61 can be also arranged in the fuel flow path 35. When the thermometer 61 is not installed for any reason, the control unit 2 monitors conductivity of a proton in the solid electrolyte membrane 37 by use of a method for measuring a response to a high frequency wave signal by a high frequency wave sensor, and can also estimate temperature from the measurement result.

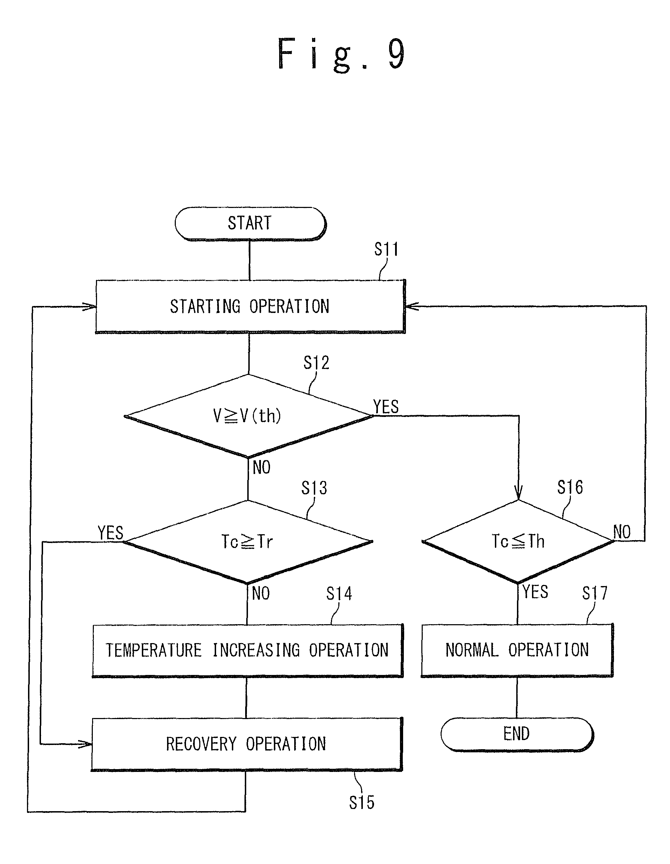

FIG. 9 shows the driving method of a fuel cell according to another embodiment of the present invention. The driving method of a fuel cell is performed by the fuel cell 1 in the present embodiment to which the heater 60 is applied. When generating power after starting-up from the stop state, the fuel cell 1 performs the start-up operation at first (step S11). In this case, in the fuel cell 1, the load switch 14 is switched so that the fuel cell main assembly 5 is connected only to the internal load 15 with low resistance, and supplies liquid fuel and oxidant to the fuel cell main assembly 5 under the same condition as the normal operation. In this case, the fuel cell 1 opens the valve 22 of the oxidant supplying unit 4, operates the pump 54, and passes the oxidant through the oxidant flow path 36. Further, the fuel cell 1 passes liquid fuel through the fuel flow path 35 by switching the valve 54 of the fuel supplying unit 51 so that the first fuel tank 52 is connected to the pump 55, and operating the pump 55 of the fuel supplying unit 51. The fuel cell 1 measures the output voltage of the fuel cell main assembly 5 by the voltmeter 7, and measures temperature of the solid electrolyte membrane 37 by the thermometer 61. At this moment, electrons are generated by reduction reaction progressing in the anode 38 when the fuel cell main assembly 5 is stopped, and move to the cathode 39, to drop the potential of the cathode 39.

When the output voltage V of the fuel cell main assembly 5 indicates almost a constant value, the fuel cell 1 compares the output voltage V at that time with the threshold voltage Vth. When the output voltage V is the threshold voltage Vth or less (step S12, NO) and temperature Tc of the solid electrolyte membrane 37 is less than recovery operation temperature Tr (step S13, NO), the fuel cell 1 starts a heating operation (step S14). Here, using an upper limit temperature Th and a critical temperature Tu of the MEA, the recovery operation temperature Tr is set to a value meeting a condition expressed in the following equation:

$$Th+5 \leq Tr \leq Tu-5$$

In addition, it is preferable for the recovery operation temperature Tr to be set so as to meet a condition expressed in the following equation:

$$Th+10 \leq Tr \leq Tu-10$$

for example, in the fuel cell device mounted on a portable electronic device, the upper limit temperature Th is from 40 °C to 60 °C and the critical temperature Tu is from 60°C to 80°C. The fuel cell 1 heats the solid electrolyte membrane 37 until the recovery operation temperature Tr in the heating operation by the heater 60.

When the output voltage V is the threshold voltage Vth or less (step S12, NO) and temperature Tc of the solid electrolyte membrane 37 is higher than the recovery operation temperature Tr (step S13, YES), or after the heating operation, the fuel cell 1 performs recovery operation (step S15). That is to say, in the fuel cell 1, the load switch 14 is switched to connect the fuel cell main assembly 5 only with the internal load 15. Further, the fuel cell 1 stops supplying oxidant to the fuel cell main assembly 5 by stopping the pump 21 of the oxidant supplying unit 4 and closing the valve 22. Furthermore, the fuel cell 1 passes a high concentration of methanol aqueous solution through the fuel flow path 35 by switching the valve 54 of the fuel supplying unit 51 so that the second fuel tank 53 is connected to the pump 55, and operating the pump 55 of the fuel supplying unit 51.

It should be noted that the fuel cell 1 can also include the flow path resistance 6 in the above mentioned embodiment, and appropriately employ a method for supplying liquid fuel with high concentration of organic fuel component after pressurizing it in the recovery operation.

The metal catalyst contained in the cathode catalyst layer 44 forms oxides or hydroxides or adsorbs oxygen on its surface, in the stop state. In the recovery operation, the surface of the metal catalyst is reduced, and the metal catalyst is activated again.

When the output voltage V is less than the predetermined voltage Vr (for example, 0.3V), the fuel cell 1 performs the start-up operation again (step S11). In addition, when the output voltage V is 0V or after the output voltage has been held in 0V for a predetermined time, the fuel cell 1 also can perform the start-up operation again.

When the output voltage V is higher than the threshold voltage Vth (step S12, YES) and temperature Tc of the solid electrolyte membrane 37 is higher than the upper limit temperature Th in the normal generation of the fuel cell main assembly 5 (step S16, NO), the fuel cell 1 performs the start-up operation again (step S11).

When the output voltage V is higher than the threshold voltage Vth (step S12, YES) and temperature Tc of the solid electrolyte membrane 37 is smaller than the upper limit temperature Th in the normal generation of the fuel cell main assembly 5 (step S16, YES), the fuel cell 1 performs the normal operation (step S17). The normal operation is a usual state that the external load 20 is connected to the fuel cell main assembly 5, and when the external load 20 is, for example, an electronic device 20, the electronic device is being used. That is to say, the fuel cell 1 switches the load switch 14 so that the external load 20, instead of the internal load 15, is connected to the fuel cell main assembly 5, and supplies liquid fuel and oxidant to the fuel cell main assembly 5 under a predetermined condition. In this case, the fuel cell 1 passes the oxidant through the oxidant flow path 36 by opening the valve 22 of the oxidant supplying unit 4 and operating the pump 54. Further, the fuel cell 1 passes the liquid fuel through the fuel flow path 35 by switching the valve 54 of the fuel supplying unit 51 so that the first fuel tank 52 is connected to the pump 55, and operating the pump 55 of the fuel supplying unit 51.

In the present embodiment, permeability of the organic fuel component through the electrolyte membrane is improved and crossover of the organic fuel component is positively generated by raising temperature of the solid electrolyte membrane 37 higher than in the normal generation. The crossover of the organic fuel component can be positively generated since diffusion speed of the organic fuel component in the electrolyte membrane increases when temperature of the solid electrolyte membrane 37 is raised. In addition, when the solid electrolyte membrane 37 contains material which increases the permeability of the organic fuel component, depending on temperature, the crossover caused by heating is promoted. Especially, it is preferable that control for generating crossover in the recovery operation and suppressing the cross over in the normal generation can be realized when the solid electrolyte membrane 37 contains material which rapidly increases the permeability of the organic fuel component in slightly higher temperature than that in the normal generation (for example, higher temperature by 5 to 10 °C). The electrolyte membrane is formed of material containing aromatic polymer, and is superior in controlling the crossover.

It should be noted that the fuel cell can also heat the solid electrolyte membrane 37 in the heating operation without using the heater 60. In this case, the fuel cell generates much reaction heat by supplying fuel with the high concentration of organic fuel component to the fuel cell main assembly 5, and heats the solid electrolyte membrane 37 with the reaction heat. A heating method using such reaction heat is preferable since heating means is not required in the fuel cell.

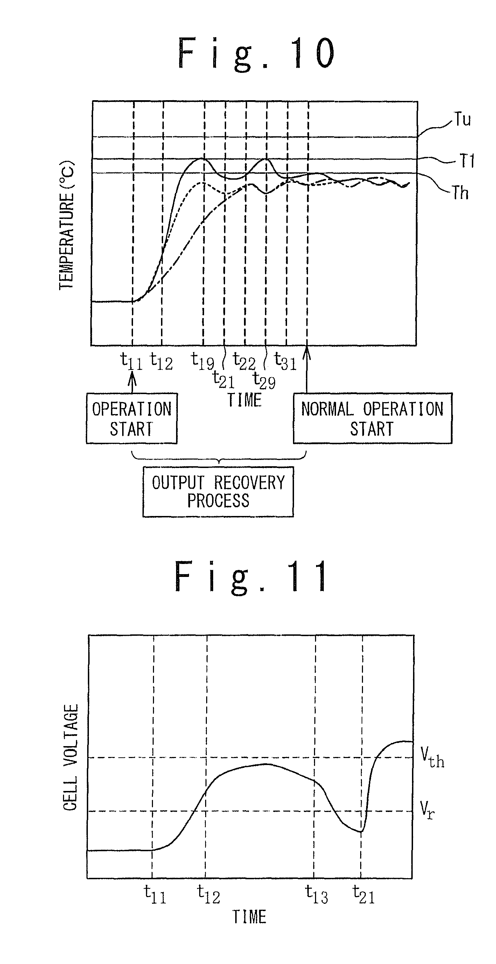

FIG. 10 shows in a solid line, change in the MEA surface temperature Tc measured by the thermometer 61 when the operation shown in FIG. 9 is executed. In the start-up operation, overcurrent flows since a state that the internal load 15 with low resistance is connected is a state that the anode 38 and the cathode 39 are short-circuited, and reaction heat is generated more than when the external load 20 is connected. For this reason, the MEA surface temperature Tc rapidly rises from time t11 when a first start-up operation begins to time t12 when a first heating operation begins. The heating operation is an operation for heating the solid electrolyte membrane 37 by supplying fuel with a high concentration of organic fuel component to the fuel cell main assembly 5. Since the heating operation is performed under the same condition as the start-up operation except supply of high concentration of fuel, reaction heat is generated more than in the start-up operation. As a result, the MEA surface temperature Tc rises from time t12 to time t13 when a first recovery operation begins.

Radiation from the fuel cell main assembly 5 because of fuel supply is larger than the reaction heat since oxidant is not supplied in the recovery operation. For this reason, the MEA surface temperature Tc slightly drops. When the start-up operation is switched to the heating operation, a rate of temperature rising becomes higher than that in the start-up operation. For this reason, the MEA surface temperature Tc slightly drops. When the operation is switched to a second start-up operation, reaction heat is generated more again. As a result, the MEA surface temperature Tc rises again from time 21 when the second start-up operation begins.

When the output voltage V is not equal to or higher than the threshold voltage Vth and the temperature Tc is lower than the recovery operation temperature Tr, the second heating operation is performed. Thus, the MEA surface temperature Tc also rises from time t22 when the second heating operation begins. Furthermore, the MEA surface temperature Tc drops from time t23 when the second recovery operation begins to time t31 when a third start-up operation begins. After t31, when the output voltage V is equal to or higher than the threshold voltage Vth and the temperature Tc is equal to or lower than the upper limit temperature Th, the normal operation is performed.

In the present embodiment, even when the output voltage V is equal to or higher than the threshold voltage Vth in the last start-up operation, and the temperature Tc is equal to or lower than the limiting temperature Th, the output voltage may be unstable if immediately switched to the normal operation because crossover is positively generated by raising temperature of the MEA to the upper limit temperature Th or higher. To avoid this, the last start-up operation may be continued additionally for a predetermined time after the output voltage V is the threshold voltage Vth or higher and the temperature Tc is the upper limit temperature Th or lower. It is preferable to do so in case that an electronic device requiring stability of the output voltage is an external load.

The MEA surface temperature Tc rises once since high concentration of fuel is remained in the fuel flow path 35 immediately after being switched to the normal operation, but gradually drops. Finally, the radiation due to passing of fuel and oxidant and the reaction heat from the fuel cell main assembly 5 caused are balanced, and the temperature Tc is stabilized in lower temperature than the upper limit temperature Th. Meanwhile, even when the external load 20 is connected instead of the internal load 15 in the start-up operation, functions of the start-up operation and the heating operation can be achieved. However, it is more preferable to connect the internal load 15 in the start-up operation and the heating operation in order to recover the output voltage in a short time by shortening a time required in heating of the MEA.

Furthermore, FIG. 10 shows in dashed line, change in MEA surface temperature Tc in a comparison example 1 which performs the normal operation directly from the start-up operation, and shows in chain line, change in MEA surface temperature Tc in a comparison example 2 which performs the normal generation at the start of the operation. In the comparison example 1, the MEA surface temperature Tc rises from time t11 when a first start-up operation begins to time t13 when the normal operation begins, and is almost stabilized after the time t13 when the radiation caused by passing of fuel and oxidant and the reaction heat from the fuel cell main assembly 5 are balanced. In the comparison example 2, since the external load 20 is connected at the start of the operation, the temperature gradually rises and is almost stabilized when the radiation caused by passing of fuel and oxidant and the reaction heat from the fuel cell main assembly 5 are balanced.

FIG. 11 shows the output voltage of the fuel cell main assembly 5 measured by the voltmeter 7 when the operation of FIG. 9 is performed. The output voltage V rises with temperature rising for a while from the time t11, and is saturated before reaching the threshold voltage Vth. The fuel cell switches the operation to the heating operation at time t12 when the temperature Tc is less the recovery operation temperature Tr. The output voltage V begins to drop nearly when the temperature Tc reaches the upper limit temperature Th since crossover of organic fuel component rapidly increases. The fuel cell switches the operation to the recovery operation when the temperature Tc reaches the recovery operation temperature Tr. For this reason, the output voltage rapidly drops from the time t13. When the recovery operation is continued, the output voltage V becomes almost 0V before long, however, the fuel cell performs a second start-up operation at time t21 when the voltage becomes 0.1V. As a result, the output voltage V rises from the time t21.

In the fuel cell according to another embodiment of the present invention, the fuel supplying unit 3 in the above-mentioned embodiment is replaced by another fuel supplying unit. The fuel supplying unit can supply a plurality of liquid fuels (more than three types) whose concentrations are different from each other, to the fuel cell main assembly 5.

In this case, the fuel supplying unit includes a plurality of tanks for storing a plurality of the liquid fuels, and a switching valve. The switching valve connects one of a plurality of the tanks to the fuel flow path 35 of the fuel cell main assembly 5. Or, the fuel supplying unit includes a low-concentration liquid fuel tank for storing liquid fuel with low concentration (for example, water), a high-concentration liquid fuel tank for storing liquid fuel with high concentration (for example, methanol), and a mixing valve. The mixing valve is controlled by the control unit 2 to supply two liquid fuels stored in the low-concentration liquid fuel tank and the high -concentration liquid fuel tank to the fuel cell main assembly 5 while changing a mixing ratio of the fuels.

The driving method of a fuel cell in another embodiment is performed by a fuel cell including such a fuel supplying unit, and the recovery operation of the driving method of a fuel cell in the above-mentioned embodiment is replaced by another recovery operation. When repeatedly performed, the recovery operation in the above mentioned embodiment supplies liquid fuel to the fuel cell main assembly 5 in same concentration and pressure in respective times. When repeatedly performed, the recovering process in the present embodiment is performed so as to reduce load of the fuel cell main assembly 5 at first, and is next performed so that the load can be increased more than that of the recovery operation performed last time. That is to say, the fuel cell counts the number of times of the recovery operation performed after the stop state, supplies liquid fuel to the fuel cell main assembly 5 so that a higher concentration of the fuel can be supplied in the recovery operation, when the number of times is larger. In addition, the fuel cell can also supply liquid fuel to the fuel cell main assembly 5 so that the pressure of the fuel can be increased larger in the recovery operation when the number of times is larger. Furthermore, the fuel cell supplies liquid fuel to the fuel cell main assembly 5 so that the higher concentration and pressure of the fuel may be supplied in the recovery operation, when the number of times is larger.

According to these operations, the load of the MEA can be reduced.

(First Example)

An MEA in a first example uses an anode which is made by applying a mixture of carbon-supporting Ru-Pt catalyst and the "Nafion" on a carbon paper, and a cathode which is made by applying a carbon-supporting Pt catalyst and the "Nafion" on a carbon paper. The MEA in the first example is made by sandwiching and hot-pressing the "Nafion membrane" by these electrodes. A fuel cell incorporating the MEA is made and the fuel cell is driven to generate power by supplying methanol aqueous solution of 10 wt.% to an anode side flow path and air to a cathode side flow path. Supply quantities of them are twice and 10 times of a quantity necessary for maximum power generation amount. Meanwhile, fuel supply in power generation is in the same condition, hereinafter. After that, all valves are closed, and the fuel cell is stopped and stored for 24 hours in a state that the anode side is filled with methanol aqueous solution. When the state of the fuel cell is observed after the storage, the anode side was filled with fuel, and many water drippings were formed on the surface of the cathode. Although the fuel cell generated power under the same condition by sequentially opening all the valves, the output was lower than them in the previous days. That is to say, it is realized that the output of the fuel cell drops after the stop and storage even when the anode is filled with methanol aqueous solution, so that electrodes and electrolyte membranes are wet. After this, the recovery operation of the present invention was performed. Specifically, air supply was stopped for two minutes in an open circuit state. At this moment, an open circuit voltage dropped to 0.2V. When the fuel cell generates power again through air supply after the recovery operation, the output recovered to almost the same value as that in the previous days. As a comparison example, although, in the fuel cell which is stopped and stored for 24 hours in a similar manner to the above description, power generation was performed through air supply to the cathode after supplying only methanol aqueous solution first for 20 minutes by stopping air supply after the storage, the output stayed to be dropped.

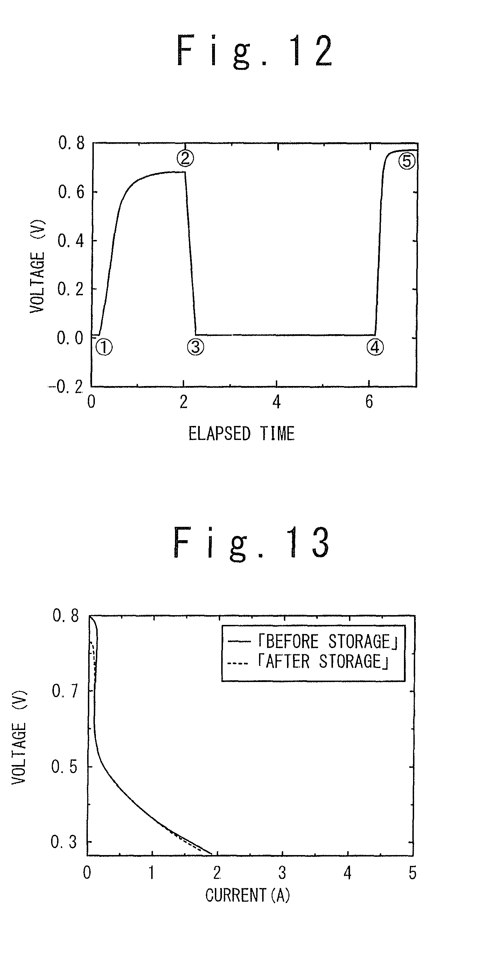

FIG. 12 shows an example of time passage of processes in the fuel cell. A time observing unit is added to the fuel cell used here. The used MEA is formed in similar manner to the first example. Further, the fuel cell in the present example was stored for 24 hours after generating power, while the anode side of the fuel cell main assembly is filled with water and air supply to the cathode side is blocked by using an oxidant supply control unit. In the fuel cell, supply of methanol aqueous solution fuel and air began with no load in (1), and then the recovery operation of the present invention began in (2). Specifically, the operation with load is performed by using an internal load while keeping a voltage of the fuel cell main assembly to 0.3V or less after blocking air supply to the cathode by the oxidant supplying unit. However, a maximum current is limited by a capacity of the internal load. In addition, the generated power is not supplied to the external load. In the fuel cell, after a voltmeter confirms that the voltage of the fuel cell main assembly reached 0.1V ((3)), counting of time passage is started by the time observing unit. After time preliminarily stored in the control unit 2 passed ((4)), the operation with load by using the internal load 8 is stopped and air supply to the cathode by the oxidant supplying unit is started again. Finally, power supply to the external load is started by the load control unit after stability of an open voltage is confirmed by a voltage observing unit ((5)).

FIG. 13 shows output characteristics of the fuel cell in which process was performed as shown in FIG. 12. The output characteristics after stop and storage are almost same as them before the storage, and the driving method of the fuel cell according to the present invention prevents output characteristics of the fuel cell from deteriorating.

**Claims**

1. A fuel cell comprising:

   a fuel cell main assembly configured to generate power through chemical reaction of fuel and oxidant; and
   a fuel supplying unit,

   wherein said fuel supplying unit supplies a liquid fuel to said fuel cell main assembly in a normal, operation in which the power is supplied to an external load, and
   wherein said fuel supplying unit supplies the liquid fuel to said fuel cell main assembly to reduce an electrode of said fuel cell main assembly in a recovery operation after a stop state in which said fuel cell main assembly is not connected to any load.

2. The fuel cell according to claim 1, wherein said fuel supplying unit supplies the liquid fuel to said fuel cell main assembly in a normal pressure in the normal operation, and in a recovery pressure greater than the normal pressure in the recovery operation.

3. The fuel cell according to claim 2, further comprising:

   a flow path resistance configured to exhaust the liquid fuel from said fuel cell main assembly in the normal operation and applies a pressure in the recovery operation such that the liquid fuel is not exhausted from said fuel cell main assembly.

4. The fuel cell according to any of claims 1 to 3, wherein the fuel comprises:

   a normal liquid fuel; and
   a recovery liquid fuel in which a fuel concentration is higher than that of the normal liquid fuel, and

   wherein said fuel supplying unit supplies the normal liquid fuel to said fuel cell main assembly in the normal operation, and the recovery liquid fuel to said fuel cell main assembly in the recovery operation.

5. The fuel cell according to claim 4, wherein said fuel supplying unit comprises:

   a normal tank configured to store the normal liquid fuel;
   a recovery tank configured to store the recovery liquid fuel; and
   a valve configured to connect one of said normal tank and said recovery tank to said fuel cell main assembly.

6. The fuel cell according to claim 4, wherein said fuel supplying unit comprises:

   a low concentration liquid fuel tank configured to store a low concentration liquid fuel;
   a high concentration liquid fuel tank configured to store a high concentration liquid fuel which is higher in fuel concentration than that of the low concentration liquid fuel; and
   a valve configured to mix the low concentration liquid fuel and the high concentration liquid fuel to produce one of the normal liquid fuel and the recovery liquid fuel.

7. The fuel cell according to any of claims 1 to 6, further comprising:

   an oxidant supplying unit configured to supply an oxidant gas containing the oxidant to said fuel cell main assembly in the normal operation, and to reduce a supply quantity of the oxidant gas in the recovery operation to a less quantity than in the normal operation.

8. The fuel cell according to any of claims 1 to 7, further comprising:

   a thermometer configured to measure a temperature of an electrolyte membrane of said fuel cell main assembly,

   wherein the recovery operating is performed when the temperature of said electrolyte membrane is higher than a predetermined temperature.

9. The fuel cell according to claim 8, further comprising:

   a heater configured to heat said electrolyte membrane when the temperature of said electrolyte membrane is higher than the predetermined temperature.

10. The fuel cell according to any of claims 1 to 9, further comprising:

    an internal load configured to consume the power in the recovery operation.

11. The fuel cell according to any of claims 1 to 10, further comprising:

    an auxiliary power supply configured to supply power to said external load in the recovery operation.

12. The fuel cell according to claim 2 or 3, further comprising:

    a counter configured to count the number of times of the recovery operation after the stop state,

    wherein said fuel supplying unit supplies the recovery liquid fuel to said fuel cell main assembly in the recovery operation such that a higher concentration of the recovery liquid fuel is supplied when the number of times is larger.

13. The fuel cell according to any of claims 4 to 6, further comprising:

    a counter configured to count the number of times of the recovery operation after the stop state,

    wherein said fuel supplying unit supplies the recovery liquid fuel to said fuel cell main assembly such that the recovery liquid fuel is supplied in a larger pressure than when the number of times is larger.

14. An electronic equipment comprising:

    the fuel cell according to any of claims 1 to 13; and
    the external load.

15. A driving method of a fuel cell in which power is generated from a liquid fuel containing fuel and oxidant by a fuel cell main assembly, the driving method comprising:

    performing a start-up operation which is started after a stop state in which a load is not connected the fuel cell main assembly;
    performing a recovery operation in which the liquid fuel is supplied to the fuel cell main assembly such that an electrode of the fuel cell main assembly is reduced after the start-up operation; and
    performing a normal operation in which the power is supplied to an external load.

16. The driving method according to claim 15, wherein a pressure of a recovery liquid fuel as the liquid fuel supplied to the fuel cell main assembly in the recovery operation is larger than a pressure of a normal liquid fuel as the liquid fuel supplied to the fuel cell main assembly in the normal operation.

17. The driving method according to claim 15, wherein a concentration of a recovery liquid fuel as the liquid fuel supplied to the fuel cell main assembly in the recovery operation is higher than a concentration of a normal liquid fuel as the liquid fuel supplied to the fuel cell main assembly in the normal operation.

18. The driving method according to claim 15, wherein a concentration of a recovery liquid fuel as the liquid fuel supplied to the fuel cell main assembly in the recovery operation is higher than a concentration of a normal liquid fuel as the liquid fuel supplied to the fuel cell main assembly in the normal operation, and a pressure of the recovery liquid fuel is larger than a pressure of the normal liquid fuel.

19. The driving method according to any of claims 15 to 18, wherein a concentration of a start-up liquid fuel as the liquid fuel supplied to the fuel cell main assembly in the start-up operation is almost equal to a concentration of a normal liquid fuel as the liquid fuel supplied to the fuel cell main assembly in the normal operation.

**20.** The driving method according to any of claims 15 to 19, wherein a pressure of a start-up liquid fuel as the liquid fuel supplied to the fuel cell main assembly in the start-up operation is almost equal to a pressure of a normal liquid fuel as the liquid fuel supplied to the fuel cell main assembly in the normal operation.

**21.** The driving method according to any of claims 15 to 20, wherein the recovery operation is performed when an output voltage of the fuel cell main assembly in the start-up operation is smaller than a threshold voltage.

**22.** The driving method according to any of claims 15 to 21, further comprising:

performing another start-up operation when an output voltage of the fuel cell main assembly is smaller than the predetermined voltage in the recovery operation,

wherein the recovery operation is performed when the output voltage of the fuel cell main assembly is smaller than the threshold voltage in said another start-up operation, and
wherein the normal operation is performed when the output voltage of the fuel cell main assembly is larger than the threshold voltage in said another start-up operation.

**23.** The driving method according to any of claims 15 to 22, wherein the concentration of the recovery liquid fuel is higher when the number of times of the recovery operation after the stop state is larger.

**24.** The driving method according to any of claims 15 to 23, wherein the pressure of the recovery liquid fuel is higher when the number of times of the recovery operation after the stop state is larger.

**25.** The driving method according to any of claims 15 to 24, further comprising:

performing a heating operation in the start-up operation when a temperature of an electrolyte membrane of the fuel cell main assembly is lower than a predetermined temperature,

wherein the recovery operation is performed when the temperature of the electrolyte membrane is higher than the predetermined temperature.

**26.** The driving method according to claim 25,
wherein said performing the heating operation comprises:

heating the electrolyte membrane by supplying the liquid fuel whose concentration is higher than that of the start-up liquid fuel, to the fuel cell main assembly.

**27.** The driving method according to claim 25, wherein the fuel cell includes a heater, and
said performing a heating operation comprises:

heating the electrolyte membrane by the heater.

**28.** The driving method according to any of claims 25 to 27, wherein the normal operation is performed when the temperature of the electrolyte membrane is higher than the predetermined temperature.

**29.** The driving method according to any of claims 15 to 28, wherein said performing the normal operation comprises:

supplying the power to an internal load without supplying the power to the external load.

**30.** The driving method according to any of claims 15 to 29, wherein the normal operation is not performed when the recovery operation has been performed more than a predetermined number of times after the stop state.

**31.** The driving method according to any of claims 15 to 29, further comprising:

generating an alarm to a user when the recovery operation is performed more than a predetermined number of times after the stop state.

**32.** The driving method according to any of claims 15 to 31, wherein the normal operation is not performed when the recovery operation is performed more than a predetermined number of times.

33. The driving method according to any of claims 15 to 31, further comprising:

generating an alarm to a user when the recovery operation is performed more than a predetermined number of times.

# Fig. 1

EP 1 906 480 A1

# Fig. 2

# Fig. 3

LIQUID FUEL →

OXIDANT (AIR) ←

# Fig. 4

2

CONTROL UNIT

| OPERATION SEQUENCE DATABASE | 71 |

| STATUS COLLECTING SECTION | 72 |

| FUEL SUPPLY CONTROL SECTION | 73 |

| OXIDANT SUPPLY CONTROL SECTION | 74 |

| LOAD CONTROL SECTION | 75 |

| AUXILIARY POWER SUPPLY CONTROL SECTION | 76 |

| SAFETY MECHANISM SECTION | 77 |

# Fig.5

```
                    ┌─────────────┐
                    │    START    │
                    └─────────────┘
                           │
                           │              S1
                    ┌──────▼──────────────┐
          ┌────────▶│ STARTING OPERATION  │
          │         └──────────┬──────────┘
          │                    │
          │                    │         S2
          │                ╱───▼───╲
          │              ╱           ╲      YES
          │            ╱   V≧V(th)    ╲────────────┐
          │              ╲           ╱             │
          │                ╲───┬───╱               │
          │                 NO │                   │
          │          S3        │                   │        S4
          │    ┌───────────────▼────┐      ┌───────▼──────────────┐
          │    │ RECOVERY OPERATION │      │   NORMAL OPERATION   │
          │    └───────────────┬────┘      └───────┬──────────────┘
          │                    │                   │
          └────────────────────┘            ┌──────▼──────┐
                                            │     END     │
                                            └─────────────┘
```

# Fig. 6

# Fig. 7

# Fig. 8

# Fig. 9

```
                        ┌──────────┐
                        │  START   │
                        └────┬─────┘
                             │                    S11
        ┌──────────────►┌────┴─────────────────┐◄──────────────────┐
        │               │  STARTING OPERATION  │                   │
        │               └────────┬─────────────┘                   │
        │                        │         S12                      │
        │                     ╱──┴──╲                               │
        │                   ╱         ╲         YES                 │
        │                 ╱  V ≧ V(th)  ╲──────────────┐            │
        │                 ╲             ╱               │            │
        │                   ╲         ╱                 │            │
        │                     ╲──┬──╱                   │            │
        │                     NO │             S16      │           │
        │                 S13 ╱──┴──╲                ╱──┴──╲         │
        │          YES      ╱         ╲            ╱         ╲    NO │
        │    ┌─────────────╱  Tc ≧ Tr  ╲        ╱  Tc ≦ Th    ╲─────┘
        │    │             ╲           ╱        ╲             ╱
        │    │               ╲       ╱            ╲         ╱
        │    │                 ╲──┬──╱              ╲──┬──╱
        │    │                 NO │    S14         YES │   S17
        │    │       ┌────────────┴──────────┐ ┌───────┴──────────┐
        │    │       │ TEMPERATURE INCREASING│ │ NORMAL OPERATION │
        │    │       │      OPERATION        │ └───────┬──────────┘
        │    │       └───────────┬───────────┘         │
        │    │                   │                 ┌───┴────┐
        │    └──►┌───────────────┴───────┐         │  END   │
        │        │  RECOVERY OPERATION   │         └────────┘
        │        └───────────┬───────────┘
        │                    │        S15
        └────────────────────┘
```

# Fig. 10

OPERATION START

NORMAL OPERATION START

OUTPUT RECOVERY PROCESS

# Fig. 11

# Fig. 12

# Fig. 13

## INTERNATIONAL SEARCH REPORT

| International application No. |
| --- |
| PCT/JP2006/313991 |

A. CLASSIFICATION OF SUBJECT MATTER
*H01M8/04(2006.01)i, H01M8/10(2006.01)n*

According to International Patent Classification (IPC) or to both national classification and IPC

B. FIELDS SEARCHED

Minimum documentation searched (classification system followed by classification symbols)
H01M8/00-8/24

Documentation searched other than minimum documentation to the extent that such documents are included in the fields searched
Jitsuyo Shinan Koho 1922-1996 Jitsuyo Shinan Toroku Koho 1996-2006
Kokai Jitsuyo Shinan Koho 1971-2006 Toroku Jitsuyo Shinan Koho 1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2004-55474 A (Yuasa Corp.), 19 February, 2004 (19.02.04), Full text (Family: none) | 1,4-6,15,17, 25,26 |
| E,X E,A | JP 2006-221970 A (Asahi Glass Co., Ltd.), 24 August, 2006 (24.08.06), Full text (Family: none) | 1-5,14-20 6-13,21-33 |
| P,A | JP 2006-4868 A (Sony Corp.), 05 January, 2006 (05.01.06), Full text & WO 2005/124914 A1 | 1-33 |

| ☒ | Further documents are listed in the continuation of Box C. | ☐ | See patent family annex. |
| --- | --- | --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 12 September, 2006 (12.09.06) | Date of mailing of the international search report 19 September, 2006 (19.09.06) |
| --- | --- |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/313991 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,A | JP 2006-32210 A  (Toray Industries, Inc.),<br>02 February, 2006 (02.02.06),<br>Full text<br>(Family: none) | 1-33 |
| A | JP 2004-103531 A  (Canon Inc.),<br>02 April, 2004 (02.04.04),<br>Full text<br>(Family: none) | 1-33 |
| A | JP 2005-166572 A  (Sony Corp.),<br>23 June, 2005 (23.06.05),<br>Full text<br>(Family: none) | 1-33 |
| A | WO 2004/30134 A1  (GS Yuasa Corp.),<br>08 April, 2004 (08.04.04),<br>Full text<br>& US 2006/141307 A1      & DE 10393382 T5 | 1-33 |

Form PCT/ISA/210 (continuation of second sheet) (April 2005)

**EP 1 906 480 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP P200447427 A
- JP P2003536232 A
- JP P200377512 A
- JP P2004127618 A
- JP P200538791 A
- JP P2004530259 A